# EUROPÄISCHE PATENTSCHRIFT

(11) **EP 2 792 341 B1**
(45) Veröffentlichungstag und Bekanntmachung des Hinweises auf die Patenterteilung: **18.05.2016**
(21) Anmeldenummer: 14164714.9
(22) Anmeldetag: 15.04.2014
(51) Int. Cl.: A61G 13/02

(54) **Verfahren und Vorrichtung zur Bedienung eines Operationstischs**
Device and method for operating an operating table
Procédé et dispositif destinés à la commande d'une table d'opération

(30) Priorität: 15.04.2013 DE 102013103755
(43) Veröffentlichungstag der Anmeldung: 22.10.2014
(73) Patentinhaber: Maquet GmbH, 76437 Rastatt (DE)
(72) Erfinder: Ruch, Jürgen, 77652 Offenburg (DE); Welsch, Michael, 76571 Gaggenau (DE)
(74) Vertreter: Zacco GmbH

(56) Entgegenhaltungen:
- EP-A2- 1 419 757
- WO-A1-2006/038161
- DE-A1-102005 053 754
- US-A- 5 926 002
- US-A1- 2013 003 938

## Beschreibung

Die Erfindung betrifft ein Verfahren und eine Vorrichtung zum Bedienen eines Operationstischs, der eine Mehrzahl von mithilfe von Bedienelementen verstellbaren Komponenten hat. Während einer Operation eines auf dem Operationstisch gelagerten Patienten wird die Position eines Patienten mehrmals geändert, um den Eingriff zu erleichtern. Dabei ist es oft erforderlich, den Patienten in eine Position zu bringen, die er zuvor schon einmal eingenommen hatte. Auch kann ein wiederholter Wechsel zwischen zwei oder mehreren Positionen während einer Operation erforderlich sein.

Aus dem Dokument DE 199 55 116 A1 ist eine Steuereinheit zur Ansteuerung der Antriebe einer von einer Operationstischsäule abnehmbaren Patientenlagerfläche mit elektromotorisch verstellbaren Komponenten, bestehend aus einer Energieversorgung, einer Steuerung und einem Bediengerät, bekannt. Das Bediengerät ist in einen Transportwagen zum Transport der Operationstischlagerfläche integriert.

Aus dem Dokument DE 10 2007 062 200 A1 ist ein Operationstisch mit einer Vielzahl von mithilfe von Bedienelementen verstellbaren Komponenten bekannt. Der Zustand und/oder die Zustandsänderung mindestens eines Teils der Bedienelemente wird durch Sensoren erfasst, wobei die von den Sensoren erzeugten Signale einer Verarbeitungseinrichtung zugeführt werden.

Aus dem Dokument DE 10 2005 054 230 A1 sind ein Verfahren und eine Einrichtung zur bidirektionalen Infrarotdatenübertragung zwischen einem Operationstisch und einem Bediengerät bekannt. Der Operationstisch und das Bediengerät sind jeweils Teilnehmer einer Infrarotdatenübertragung und umfassen jeweils einen Infrarotsender und einen Infrarotempfänger.

Aus dem Dokument DE 10 2005 054 223 A1 ist eine Einrichtung zum Verstellen eines Operationstischs bekannt, der eine Operationstischsäule hat, auf der eine verstellbare Patientenlagerfläche lösbar angeordnet ist. Die Einrichtung umfasst ein Bediengerät zum Eingeben von Verstellbefehlen zum Verstellen von Komponenten des Operationstischs. Die Verstellbefehle können vom Bediengerät direkt zur verstellbaren Lagerfläche übertragen werden.

Aus dem Dokument DE 10 2005 053 754 A1 ist eine Einrichtung zum Verstellen der Patientenlagerfläche eines Operationstischs bekannt, die mehrere relativ zueinander verstellbare Segmente umfasst. Zumindest ein Teil der verstellbaren Segmente ist mit Aktuatoren verbunden, die zum Verstellen der zugehörigen Segmente ansteuerbar sind. Die Eingabevorrichtung hat Mittel zum Eingeben von körperteilbezogenen Verstellbefehlen, die mit der Verstellung der Lage eines Körperteils oder Körperabschnitts eines auf der Patientenlagerfläche liegenden Patienten assoziiert sind.

Jedoch ist es bei einigen Operationen wünschenswert, eine Lage eines Patienten durch eine entsprechende Verstellung der Komponenten eines Operationstischs wiederherzustellen, die er bereits zuvor eingenommen hatte, insbesondere dann, wenn diese Position relativ aufwendig mithilfe eines oder mehrerer Bedienelemente hergestellt worden ist.

Aus dem Dokument US 5 926 002 A ist ein Schalter einer Bedieneinheit bekannt, durch dessen Betätigung eine Liegefläche eines Operationstischs horizontal ausgerichtet werden kann.

Aus dem Dokument EP 1 419 757 A2 sind ein Operationstisch mit mindestens einem verstellbaren Segment und eine Bedieneinheit zum Verstellen des Segments bekannt, wobei die Bedieneinheit eine Taste aufweist, durch deren Betätigung die Matratze flach angeordnet werden kann.

Es ist Aufgabe der Erfindung, ein Verfahren und eine Vorrichtung zum Bedienen eines Operationstischs anzugeben, durch die es einfach möglich ist, eine Position der verstellbaren Komponenten des Operationstischs auf einfache Art und Weise wiederherzustellen, nachdem diese mithilfe von Bedienelementen geändert worden ist.

Diese Aufgabe wird durch ein Verfahren zur Bedienung eines Operationstischs mit den Merkmalen des Anspruchs 1 und durch eine Vorrichtung mit den Merkmalen des unabhängigen Vorrichtungsanspruchs gelöst. Vorteilhafte Weiterbildungen der Erfindung sind in den abhängigen Ansprüchen angegeben.

Bei dem erfindungsgemäßen Verfahren zur Bedienung eines Operationstischs wird durch das Betätigen mindestens eines ersten Bedienelements eine erste Aktion mindestens einer ersten Antriebseinheit zum Verstellen mindestens einer ersten Komponente ausgeführt. Ferner wird durch das Betätigen eines zweiten Bedienelements die durch das Betätigen des ersten Bedienelements ausgeführte erste Aktion automatisch vollständig rückgängig gemacht. Dadurch kann eine vor der ausgeführten Aktion eingestellte Position der verstellbaren Komponenten des Operationstischs durch bloßes Betätigen des zweiten Bedienelements auf einfache Art und Weise wiederhergestellt werden, ohne dass die Position der Komponenten aufwendig durch den operierenden Arzt oder einen Assistenten wieder eingestellt werden müssen. Dadurch wird eine einfache und sichere Bedienung des Operationstischs gewährleistet. Durch das automatische Rückgängigmachen der bei der ersten Aktion ausgeführten Bewegung der Komponenten werden auch Bewegungen dieser Komponenten vermieden, die für einen auf der Lagerfläche befindlichen Patienten ungünstig sind.

Ferner wird die erste Aktion durch eine zweite Aktion automatisch vollständig rückgängig gemacht, bei der die erste Antriebseinheit und/oder die erste Komponente einen umgekehrten Bewegungsablauf automatisch vollständig ausführt, wie beim Ausführen der ersten Aktion. Insbesondere durch den umgekehrten Bewegungsablauf wird sichergestellt, dass die Bewegung der Komponenten und die dadurch bewirkte Bewegung des Patienten einer exakten umgekehrten Bewegung des Patienten bei der ersten Aktion entspricht, so dass keine den Patienten gefährdende Bewegung zu erwarten ist.

Ferner ist es vorteilhaft, wenn beim Betätigen eines dritten Bedienelements mindestens eine dritte Aktion mindestens einer zweiten Antriebseinheit zum Verstellen der ersten Komponente und/oder mindestens einer zweiten Komponente ausgeführt wird und wenn durch das Betätigen des zweiten Bedienelements die erste Aktion und die dritte Aktion automatisch vollständig rückgängig gemacht werden. Dadurch kann eine durch die Betätigung des ersten und dritten Bedienelements bewirkte Lageränderung des Patienten durch ein einfaches Betätigen des zweiten Bedienelements automatisch vollständig rückgängig gemacht werden, so dass auch mehrere ausgeführte Aktionen auf einfache Art und Weise automatisch vollständig wieder rückgängig gemacht werden können, wodurch eine bereits zuvor eingestellte Lage der Komponenten des Operationstischs sowie eine dadurch bewirkte Position des Patienten auf einfache Art und Weise wiederhergestellt werden können.

Dabei können die erste und dritte Aktion nacheinander ausgeführt werden, wobei die dritte Aktion nach der ersten Aktion ausgeführt wird. Beim einmaligen Betätigen des zweiten Bedienelements wird die dritte Aktion, vorzugsweise durch eine vierte Aktion, automatisch vollständig rückgängig gemacht. Beim nochmaligen Betätigen des zweiten Bedienelements wird die erste Aktion, vorzugsweise durch die zweite Aktion, automatisch vollständig rückgängig gemacht. Dadurch können mehrere nacheinander ausgeführte Aktionen automatisch schrittweise durch mehrmaliges Aktivieren des zweiten Bedienelements wieder rückgängig gemacht werden, wodurch die durch die erste und dritte Aktion bewirkte Bewegung des Patienten in umgekehrter Richtung erfolgt, so dass davon auszugehen ist, dass keine für den Patienten ungeeigneten Bewegungen der Komponenten des Operationstischs ausgeführt werden.

Alternativ oder zusätzlich kann das dritte Bedienelement während des Ausführens der ersten Aktion betätigt werden, wodurch zumindest ein Teil der dritten Aktion während der, d.h. zeitgleich zur, ersten Aktion ausgeführt wird. Beim Betätigen des zweiten Bedienelements werden die erste und dritte Aktion in umgekehrter Bewegungsreihenfolge ausgeführt, so dass die erste und die dritte Aktion zumindest zum Teil gleichzeitig, vorzugsweise durch eine zweite und eine vierte Aktion, rückgängig gemacht werden. Dadurch kann auf eine den Patienten schonende Art automatisch eine bereits zuvor eingestellte Position wiederhergestellt werden, nachdem diese durch mehrere Bedienaktionen geändert worden ist.

Besonders vorteilhaft ist es, wenn durch das Betätigen eines vierten Bedienelements die zuvor automatisch vollständig rückgängig gemachte Aktion wiederholt ausgeführt wird bzw. wenn durch das Betätigen des vierten Bedienelements die zuvor automatisch vollständig rückgängig gemachten Aktionen wiederholt vollständig ausgeführt werden. Dadurch kann nach dem Rückgängigmachen einer Aktion diese automatisch wieder ausgeführt werden, so dass es insbesondere sehr einfach ist, zwischen zwei unterschiedlichen Positionen hin- und herzuwechseln. Ferner wird dadurch erreicht, dass bei einem versehentlichen Rückgängigmachen einer Aktion diese einfach wieder ausgeführt werden kann. Das automatische vollständige Rückgängigmachen einer Aktion wird auch als UNDO bezeichnet und das wiederholte ausführen einer rückgängig gemachten Aktion als REDO bezeichnet.

Ferner ist es vorteilhaft, wenn beim Rückgängigmachen einer Aktion, die zum Ausführen der Aktion angesteuerte Antriebseinheit derart automatisch angesteuert wird, dass ein vollständig umgekehrter Bewegungsablauf der bei der Aktion ausgeführten Bewegung der Komponente erzeugt wird. Dadurch wird eine sichere Bewegung des Patienten gewährleistet, da lediglich ein umgekehrter Bewegungsablauf einer bereits ausgeführten Bewegung bewirkt wird und nicht ein davon abweichender, den Patienten ggf. gefährdender und ggf. für den operierenden Arzt nicht vorhersehbarer Bewegungsablauf, erzeugt wird.

Weiterhin ist es vorteilhaft, wenn beim Ausführen jeder Aktion der zeitliche Verlauf der Änderung und/oder der zeitliche Verlauf der Änderungsgeschwindigkeit der Winkelstellung einer Abtriebswelle der Antriebseinheit bzw. der Antriebswellen mehrerer Antriebseinheiten, der zeitliche Verlauf der Änderung und/oder der Änderungsgeschwindigkeit der Winkelstellung der angetriebenen Komponente bzw. der angetriebenen Komponenten erfasst und als Information gespeichert werden, wobei beim automatischen vollständigen Rückgängigmachen einer Aktion dann die Antriebseinheit bzw. die Antriebseinheiten ausgehend von der gespeicherten Information derart angesteuert wird, dass sie automatisch eine vollständige umgekehrte Bewegungsabfolge als bei der rückgängig zu machenden Aktion selbst ausführt. Dadurch wird erreicht, dass durch die erfassten Informationen tatsächlich derselbe Bewegungsablauf in umgekehrter Bewegungsabfolge ausgeführt wird, so dass eine unerwünschte Bewegung des Patienten vermieden wird.

Ferner kann beim Ausführen jeder Aktion die Schrittfolge und/oder der zeitliche Verlauf der Schrittfolge eines als Antriebseinheit dienenden Schrittmotors erfasst und als Information gespeichert werden. Beim automatischen vollständigen Rückgängigmachen der Aktion wird der Schrittmotor ausgehend von der gespeicherten Information in zeitlich umgekehrter Schrittfolge und/oder mit entgegengesetzter Drehrichtung angesteuert. Dadurch kann auf einfache Art und Weise eine umgekehrte Bewegung einer Komponente erreicht werden, die zuvor bei der rückgängig zu machenden Aktion ausgeführt worden ist.

Alternativ oder zusätzlich kann beim Ausführen jeder Aktion eine Verstellaktion, der Verstellweg, der zeitliche Verlauf des Verstellwegs, die Verstellgeschwindigkeit und/oder der zeitliche Verlauf der Verstellgeschwindigkeit eines als Antriebseinheit dienenden Linearantriebs erfasst und als Information gespeichert werden. Beim Rückgängigmachen der Aktion wird der Linearantrieb ausgehend von der gespeicherten Information derart angesteuert, dass die mindestens eine Komponente eine umgekehrte Bewegungsreihenfolge als bei der automatisch vollständig rückgängig zu machenden Aktion ausführt.

Zusätzlich oder alternativ kann die Zeitdauer der Aktivierung der Antriebseinheit und/oder die für die Antriebseinheit aktivierte Geschwindigkeitsstufe erfasst und als Information gespeichert werden. Mithilfe dieser Information kann auf einfache Art und Weise eine Antriebseinheit so angesteuert werden, dass ein umgekehrter Bewegungsablauf einfach bewirkt werden kann.

Besonders vorteilhaft ist es, wenn die mindestens eine Antriebseinheit und/oder die Vielzahl von Antriebseinheiten durch eine Steuereinheit abhängig von den durch das Betätigen der Bedienelemente erfolgten Bedieneingaben angesteuert werden. Dadurch ist eine einfache Ansteuerung der Antriebseinheiten möglich, so dass ein umgekehrter Bewegungsablauf einfach ausführbar ist, wenn eine durch Bedienelemente bewirkte Aktion durch Betätigen eines weiteren Bedienelements zum Rückgängigmachen der Aktion aktiviert wird.

Besonders vorteilhaft ist es, wenn die Steuereinheit Parameter der ausgeführten Aktion und/oder der ausgeführten Aktionen speichert. Dadurch kann die Steuereinheit einfach sicherstellen, dass tatsächlich ein umgekehrter Bewegungsablauf zum automatischen vollständig Rückgängigmachen einer bereits ausgeführten Aktion sichergestellt wird, wodurch eine Gefährdung des Patienten vermieden wird.

Besonders vorteilhaft ist es, wenn die Bedienelemente, mithilfe einer Fernbedienung, vorzugsweise einer drahtlosen Fernbedienung, bereitgestellt werden. Dabei kann die Fernbedienung alternativ oder zusätzlich Parameter der ausgeführten Aktion und/oder der ausgeführten Aktionen speichern, um mithilfe dieser gespeicherten

Informationen ein automatisches vollständiges Rückgängigmachen einer bereits ausgeführten Aktion sicher steuern zu können. Dadurch können bestehende Operationstische auch mit einer erfindungsgemäßen Funktion zum vollständigen automatischen Rückgängigmachen einer Aktion nachgerüstet werden.

Ferner ist es vorteilhaft, wenn beim Betätigen des ersten Bedienelements mehrere Aktionen ausgeführt werden und wenn beim Betätigen des zweiten Bedienelements die mehreren Aktionen in umgekehrter Reihenfolge automatisch vollständig rückgängig gemacht werden. Dadurch wird eine einfache und sichere Bewegungsabfolge erreicht, durch die ein Patient nicht gefährdet wird.

Ein zweiter Aspekt der Erfindung betrifft eine Vorrichtung zum Bedienen eines Operationstischs mit den Merkmalen des Anspruchs 14. Dadurch kann eine Bewegungsabfolge der Komponenten des Operationstischs und somit der Lageänderung eines Patienten auf einfache Art und Weise umgekehrt und wieder rückgängig gemacht werden, so dass eine vor dem Ausführen der rückgängig zu machenden Aktion vorhandene Position der Komponenten des Operationstischs auf einfache Art und Weise wieder hergestellt werden kann.

Besonders vorteilhaft ist es, wenn die Vorrichtung entsprechende Informationen zum automatischen vollständigen Rückgängigmachen der Aktion an eine Operationstischsteuereinheit überträgt. Dadurch kann die Funktion des automatischen vollständigen Rückgängigmachens einer Aktion einfach realisiert werden.

Die Vorrichtung gemäß dem zweiten Aspekt der Erfindung kann mit den zuvor für das Verfahren angegebenen vorteilhaften Weiterbildungen weitergebildet werden, wobei die angegebenen Merkmale insbesondere bei einer Verbindung der Vorrichtung mit einem Operationstisch erreicht werden.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert.

Es zeigen:
- Figur 1a: einen Operationstisch mit mehreren mithilfe von über eine drahtlose Fernbedienung bereitgestellten Bedienelementen verstellbaren Komponenten in einer Ausgangsposition;
- Figur 1b: die Fernbedienung und den Operationstisch nach Figur 1a in einer ersten Verstellposition;
- Figur 1c: die Fernbedienung und den Operationstisch nach den Figuren 1a und 1b in einer zweiten Verstellposition;
- Figur 1d: die Fernbedienung und den Operationstisch nach den Figuren 1a bis 1c nach dem Rückgängigmachen der zwischen der ersten Verstellposition und der zweiten Verstellposition erfolgten Verstellung der Komponenten;
- Figur 1e: die Fernbedienung und den Operationstisch nach den Figuren 1a bis 1d nach dem wiederholten Ausführen der rückgängig gemachten Aktion; und
- Figur 2: eine konkrete Ausführungsform einer Fernbedienung zur Bedienung eines Operationstischs.

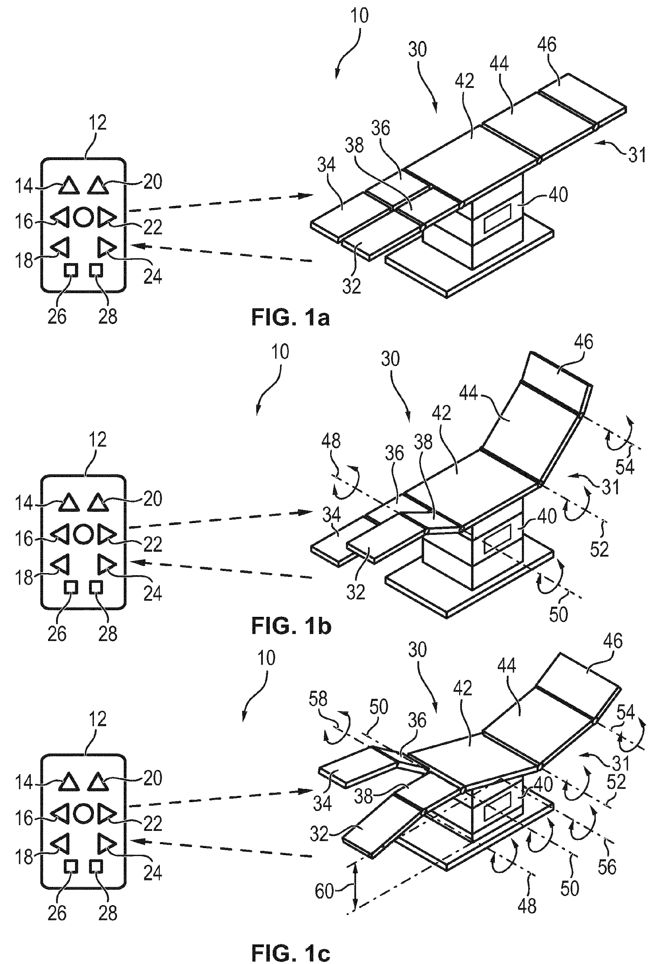

Figur 1a zeigt eine Anordnung 10 mit einer Fernbedienung 12, die mehrere Bedienelemente 14 bis 28 hat, mit deren Hilfe verstellbare Komponenten 32 bis 46 eines Operationstischs 30 verstellt, d.h. in ihrer Lage im Raum und/oder gegenüber anderen Komponenten 32 bis 46 geändert, werden können. Die einzelnen Komponenten 32 bis 46 oder Gruppen dieser Komponenten 32 bis 46 sind den Bedienelementen 14 bis 24 der Fernbedienung 12 zugeordnet, so dass beim Betätigen eines Bedienelements 14 bis 24 eine entsprechende Verstellaktion der diesem Bedienelement 14 bis 24 zugeordneten Komponente oder Komponentengruppe ausgeführt wird.

Durch entsprechende Bedieneingaben über die Bedienelemente 14 bis 24 der Fernbedienung 12 ist die Patientenlagerfläche 31 des Operationstischs 30 von der in Figur 1a gezeigten Ausgangsposition in die in Figur 1b gezeigte erste Verstellposition verstellt worden. Dabei sind die Komponenten 32 bis 48 mithilfe von in die Patientenlagerfläche 31 integrierten Antriebseinheiten um die Drehachsen 48, 50, 52 und 54 gedreht worden, bis die Komponenten 32 bis 46 der Patientenlagerfläche 31 des Operationstischs 30 die in Figur 1b gezeigte erste Verstellposition eingenommen haben. Hierfür sind mehrere Bedieneingaben über die Bedienelemente 14 bis 24 der Fernbedienung 12 erfolgt. Im weiteren Verlauf sind weitere Bedieneingaben über die Bedienelemente 14 bis 24 der Fernbedienung 12 erfolgt, bis die Komponenten 32 bis 46 der Patientenlagerfläche 31 des Operationstischs 30 die in Figur 1c gezeigte zweite Verstellposition eingenommen haben. Hierzu wurden die Komponenten wiederum um die Drehachsen 48 bis 54 sowie zusätzlich um die Drehachsen 56 und 58 gedreht. Ferner ist die Höhe der Operationstischsäule 40 verringert worden, so dass sich die Höhe der Patientenlagerfläche 31 von der in Figur 1b dargestellten ersten Verstellposition in die in Figur 1c dargestellte zweite Verstellposition auf die mit dem Bezugszeichen 60 bezeichnete Höhe verringert hat.

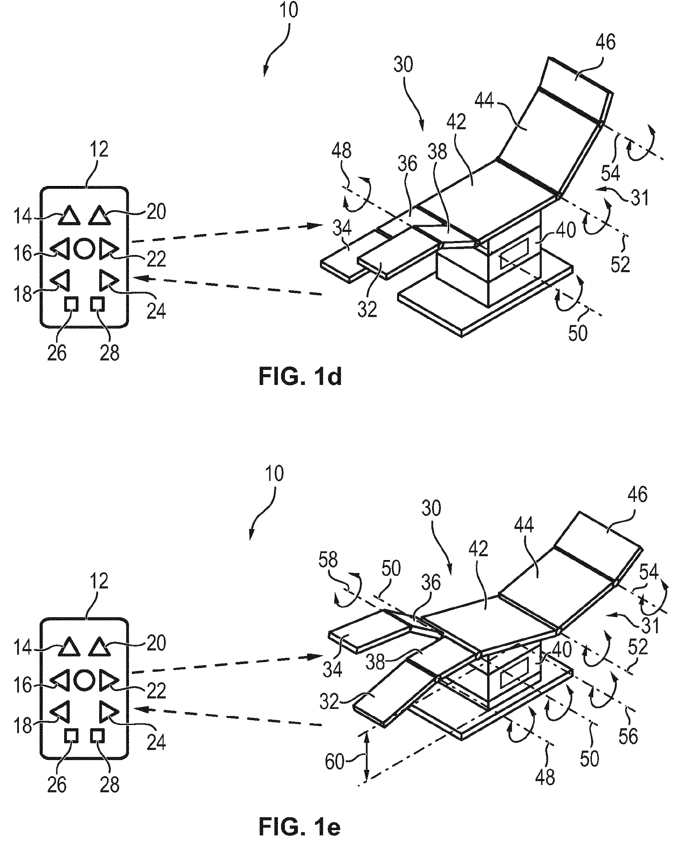

Durch das Betätigen der UNDO Taste 26 bei der in Figur 1c gezeigten Position wird die Positionsänderung der Komponenten 32 bis 48 von der in Figur 1b gezeigten ersten Verstellposition in die in Figur 1c gezeigte zweite Verstellposition automatisch vollständig rückgängig gemacht, so dass die Komponenten 32 bis 46 des Operationstischs 30 wieder die in Figur 1d gezeigte erste Verstellposition haben. Durch das anschließende Betätigen der REDO Taste 28 wird die Position der Komponenten 32 bis 46 wieder von der in Figur 1d gezeigten ersten Verstellposition in die in Figur 1e gezeigte zweite Verstellposition geändert.

Bei der beschriebenen Ausführungsform werden mehrere in einem Zeitraum ausgeführte Bedienhandlungen zu einer Verstellaktion zusammengefasst, die dann alle in umgekehrter Bewegungsabfolge automatisch beim Betätigen der UNDO Taste 26 rückgängig gemacht werden. Bei andern Ausführungsformen der Erfindung kann auch zu jeder Bedieneingabe eine Information über die durch die Bedieneingabe bewirkte Aktion zur Verstellung der jeweiligen Komponente 32 bis 48 gespeichert werden, wobei dann beim Betätigen der UNDO Taste 26 auch nur die zuletzt ausgeführte Aktion rückgängig gemacht werden kann und die zuvor ausgeführten Aktionen erst beim wiederholten Betätigen der UNDO Taste 26 rückgängig gemacht wird. Eine feinere Aufgliederung der Bedienhandlungen und eine entsprechende Speicherung der ausgeführten Aktionen haben den Vorteil, dass verschiedene Zwischenpositionen auf einfache Art automatisch wieder hergestellt werden können.

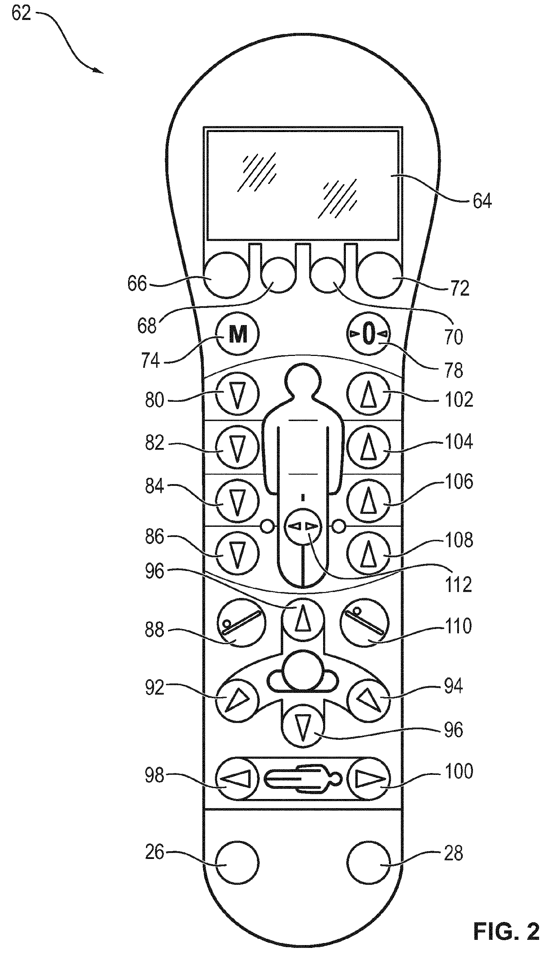

In Figur 2 ist eine Fernbedienung 62 dargestellt, die alternativ zur Fernbedienung 12 eingesetzt werden kann. Die Fernbedienung 62 hat ein Display 64 zur Anzeige von Informationen. Ferner hat die Fernbedienung 62 eine Vielzahl von Bedienelementen 66 bis 112, über die verschiedene Bedieneingaben zur Änderung der Position der Komponenten 32 bis 46 des Operationstischs 30 komfortabel eingebbar sind. Mithilfe dieser Bedienelemente 66 bis 112 kann die Position einzelner Komponenten 32 bis 46 oder die gleichzeitige Positionsänderung mehrerer Komponenten 32 bis 46 einfach eingegeben werden. Zusätzlich hat die Fernbedienung 62 eine UNDO Taste 26 und eine REDO Taste 28, die die gleiche Funktion haben, wie in Verbindung mit der Fernbedienung 12 und den Figuren 1a bis 1e zuvor beschrieben.

### Bezugszeichenliste

- 10: Anordnung
- 12, 62: Fernbedienung
- 14 bis 28, 66 bis 112: Bedienelement
- 30: Operationstisch
- 31: Patientenlagerfläche
- 40: Operationstischsäule
- 32 bis 46: Komponenten des Operationstischs
- 50 bis 58: Drehachsen
- 60: Höhenangabe
- 64: Display

## Patentansprüche

1. Verfahren zur Bedienung eines Operationstischs,der eine Mehrzahl von mithilfe von Bedienelementen (14 bis 28) verstellbaren Komponenten (32 bis 46) umfasst,
bei dem durch das Betätigen mindestens eines ersten Bedienelements (14 bis 24) eine erste Aktion mindestens einer ersten Antriebseinheit zum Verstellen mindestens einer ersten Komponente (32 bis 46) ausgeführt wird,
bei dem durch das Betätigen eines zweiten Bedienelements (26) die durch das Betätigen des ersten Bedienelements (14 bis 24) ausgeführte erste Aktion durch eine zweite Aktion automatisch vollständig rückgängig gemacht wird, bei der die erste Antriebseinheit und/oder die erste Komponente (32 bis 46) einen umgekehrten Bewegungsablauf automatisch vollständig ausführt als beim Ausführen der ersten Aktion,
bei dem beim Betätigen eines dritten Bedienelements (14 bis 24) mindestens eine dritte Aktion mindestens einer zweiten Antriebseinheit zum Verstellen der ersten Komponente (32 bis 46) und/oder mindestens einer zweiten Komponente (32 bis 46) ausgeführt wird,
**dadurch gekennzeichnet,**
**dass** das erste Bedienelement (14 bis 24) betätigt wird, wodurch die erste Aktion ausgeführt wird,
**dass** das dritte Bedienelement (14 bis 24) nach dem Betätigen des ersten Bedienelements (14 bis 24) betätigt wird, wodurch die dritte Aktion nach der ersten Aktion ausgeführt wird,
**dass** beim einmaligen Betätigen des zweiten Bedienelements (26) die dritte Aktion automatisch vollständig rückgängig gemacht wird, und
**dass** beim nochmaligen Betätigen des zweiten Bedienelements (26) die erste Aktion automatisch vollständig rückgängig gemacht wird.

2. Verfahren nach Anspruch 1, **dadurch gekennzeichnet, dass** durch das Betätigen eines vierten Bedienelements (28) die zuvor automatisch vollständig rückgängig gemachte Aktion wiederholt ausgeführt wird und/oder dass durch das Betätigen eines vierten Bedienelements (28) die zuvor automatisch vollständig rückgängig gemachten Aktionen wiederholt vollständig ausgeführt werden.

3. Verfahren nach einem der vorhergehenden Ansprüche, **dadurch gekennzeichnet, dass** beim Rückgängigmachen einer Aktion die zum Ausführen der Aktion angesteuerte Antriebseinheit derart automatisch angesteuert wird, dass ein vollständig umgekehrter Bewegungsablauf der Bewegung der Komponente (32 bis 48) bewirkt wird.

4. Verfahren nach einem der vorhergehenden Ansprüche, **dadurch gekennzeichnet, dass** beim Ausführen jeder Aktion der zeitliche Verlauf der Änderung und/oder der Änderungsgeschwindigkeit der Winkelstellung einer Abtriebswelle der Antriebseinheit, der Abtriebswellen der Antriebseinheiten, der angetriebenen Komponente und/oder der angetriebenen Komponenten (32 bis 48) erfasst und als Information gespeichert wird, wobei beim automatischen vollständigen Rückgängigmachen der Aktion die Antriebseinheit ausgehend von der gespeicherten Information derart angesteuert wird, dass sie automatisch eine vollständig umgekehrte Bewegungsabfolge als bei der rückgängig zu machenden Aktion ausführt.

5. Verfahren nach einem der vorhergehenden Ansprüche, **dadurch gekennzeichnet, dass** beim Ausführen jeder Aktion die Schrittfolge und/oder der zeitliche Verlauf der Schrittfolge eines als Antriebseinheit dienenden Schrittmotors erfasst und als Information gespeichert wird, wobei beim automatischen vollständigen Rückgängigmachen der Aktion der Schrittmotor ausgehend von der gespeicherten Information mit zeitlich umgekehrte Schrittfolge und/oder mit entgegengesetzter Drehrichtung angesteuert wird.

6. Verfahren nach einem der vorhergehenden Ansprüche, **dadurch gekennzeichnet, dass** beim Ausführen jeder Aktion eine Verstellaktion, der Verstellweg, der zeitliche Verlauf des Verstellwegs, die Verstellgeschwindigkeit und/oder der zeitliche Verlauf der Verstellgeschwindigkeit eines als Antriebseinheit dienenden Linearantriebs erfasst und als Information gespeichert wird, wobei beim Rückgängigmachen der Aktion der Linearantrieb ausgehend von der gespeicherten Information derart angesteuert wird, dass die mindestens eine Komponente eine umgekehrte Bewegungsabfolge als bei der automatisch vollständig rückgängig zu machenden Aktion ausführt.

7. Verfahren nach einem der vorhergehenden Ansprüche 4 bis 6, **dadurch gekennzeichnet, dass** zusätzlich oder alternativ die Zeitdauer der Aktivierung der Antriebseinheit und/oder die für diese Antriebseinheit aktivierte Geschwindig keitsstufe erfasst und als Information gespeichert wird.

8. Verfahren nach einem der vorhergehenden Ansprüche, **dadurch gekennzeichnet, dass** die mindestens eine Antriebseinheit und/oder die Mehrzahl an Antriebseinheiten durch eine Steuereinheit abhängig von den durch das Betätigen der Bedienelemente (14 bis 24) erfolgten Bedieneingaben angesteuert werden.

9. Verfahren nach einem der vorhergehenden Ansprüche, **dadurch gekennzeichnet, dass** die Steuereinheit Parameter der ausgeführten Aktion und/oder de ausgeführten Aktionen speichert.

10. Verfahren nach einem der vorhergehenden Ansprüche, **dadurch gekennzeichnet, dass** beim Betätigen des ersten Bedienelements (14 bis 24) mehrere Aktionen ausgeführt werden, und dass beim Betätigen des zweiten Bedienelements (26) die mehreren Aktionen in umgekehrter Reihenfolge automatisch vollständig rückgängig gemacht werden.

11. Vorrichtung zum Bedienen eines Operationstischs, der eine Mehrzahl von mit Hilfe von Bedienelementen verstellbaren Komponenten (32 bis 46) umfasst, wobei die Vorrichtung (12) mindestens ein erstes Bedienelement (14 bis 24) umfasst, bei dessen Betätigung mindestens eine erste Antriebseinheit des Operationstischs (30) eine erste Aktion zum Verstellen mindestens einer ersten Komponente (32 bis 48) des Operationstischs (30) ausführt,,
wobei die Vorrichtung (12) ein zweites Bedienelement (26) umfasst, bei dessen Betätigung die mindestens eine Antriebseinheit die durch das Betätigen des ersten Bedienelements (14 bis 24) ausgeführte erste Aktion automatisch vollständig rückgängig macht und bei der die erste Antriebseinheit und/oder die erste Komponente (32 bis 46) einen umgekehrten Bewegungsablauf automatisch vollständig ausführt als beim Ausführen der ersten Aktion,
wobei die Vorrichtung (12) ein drittes Bedienelement (14 bis 24) umfasst, bei dessen Betätigung mindestens eine zweite Antriebseinheit eine dritte Aktion zum Verstellen der ersten Komponente (32 bis 46) und/oder mindestens einer zweiten Komponente (32 bis 46) ausführt, **dadurch gekennzeichnet, dass** die Vorrichtung derart ausgebildet ist,
- dass die mindestens eine erste Antriebseinheit des Operationstischs (30) durch Betätigen des ersten Bedienelements (14 bis 24) die erste Aktion ausführt,
- dass die mindestens eine zweite Antriebseinheit des Operationstischs (30) durch nachfolgendes Betätigen des dritten Bedienelements (14 bis 24) die dritte Aktion nach der ersten Aktion ausführt,
- dass beim nachfolgenden einmaligen Betätigen des zweiten Bedienelements (26) die zweite Antriebseinheit die durch das Betätigen des dritten Bedienelements (14 bis 24) ausgeführte dritte Aktion automatisch vollständig rückgängig macht, und
- dass beim nachfolgenden nochmaligen Betätigen des zweiten Bedienelements (26) die erste Antriebseinheit die durch das Betätigen des ersten Bedienelements (14 bis 24) ausgeführte erste Aktion automatisch vollständig rückgängig macht.

## Claims

1. Method for operating an operating table, which comprises several components (32 to 46) that are adjustable with the aid of operation elements (14 to 28),
wherein by actuating at least one first operation element (14 to 24), a first action of at least one first drive unit is carried out to adjust at least one first component (32 to 46),
wherein by actuating a second operation element (26) the first action carried out by actuating the first operation element (14 to 24) is automatically completely reversed by a second action, wherein the first drive unit and/or the first component (32 to 46) automatically completely carries out a reverse motion sequence compared to carrying out the first action,
wherein by actuating a third operation element (14 to 24) at least one third action of at least one second drive unit is carried out for adjusting the first component (32 to 46) and/or at least one second component (32 to 46),
**characterised in that**
the first operation element (14 to 24) is actuated, by which the first action is carried out,
the third operation element (14 to 24) is actuated after the actuation of the first operation element (14 to 24), by which the third action is carried out after the first action,
when actuating the second operation element (26) once, the third action is automatically completely reversed, and
when actuating the second operation element (26) again, the first action is automatically completely reversed.

2. Method according to claim 1, **characterised in that** by actuating a fourth operation element (28), the action that was previously automatically completely reversed is carried out again and/or that by actuating a fourth operation element (28), the actions that were previously automatically completely reversed are carried out again completely.

3. Method according to one of the previous claims, **characterised in that** when reversing an action, the drive unit accessed for the purpose of carrying out the action is controlled automatically in such a way that a completely reversed motion sequence of the movement of the component (32 to 48) is achieved.

4. Method according to one of the previous claims, **characterised in that** when carrying out each action, the timing of the change and/or the speed of changing the angle setting of a driven shaft of the drive unit, the driven shafts of the drive units, the driven component and/or the driven components (32 to 48) is gathered and stored as information, wherein when automatically completely reversing the action, the drive unit is controlled based on the stored information in such a way that it automatically carries out a completely reversed motion sequence compared to the action to be reversed.

5. Method according to one of the previous claims, **characterised in that** when carrying out each action, the sequence of steps and/or the timing of the sequence of steps of a stepping motor serving as drive unit is gathered and stored as information, wherein the stepping motor is controlled based on the stored information with a temporally reversed sequence of steps and/or with a reversed direction of rotation when automatically completely reversing the action.

6. Method according to one of the previous claims, **characterised in that** when carrying out each action, an adjustment action, the adjustment path, the timing of the adjustment path, the adjustment speed and/or the timing of the adjustment speed of a linear drive serving as drive unit is gathered and stored as information, wherein when reversing the action, the linear drive is controlled based on the stored information in such a way that at least one component carries out a reversed sequence of movements compared to the action to be automatically completely reversed.

7. Method according to one of the previous claims 4 to 6, **characterised in that** additionally or alternatively the duration of the activation of the drive unit and/or the speed level activated for this drive unit is gathered and stored as information.

8. Method according to one of the previous claims, **characterised in that** the at least one drive unit and/or the plurality of drive units are controlled by a control unit depending on the operation inputs generated by actuating the operation elements (14 to 24).

9. Method according to one of the previous claims, **characterised in that** the control unit stores parameters of the action carried out and/or the actions carried out.

10. Method according to one of the previous claims, **characterised in that** when actuating the first operation element (14 to 24), several actions are carried out and that when actuating the second operation element (26), the several actions are automatically completely reversed in reverse order.

11. Device for operating an operating table, which comprises several components (32 to 46) which can be adjusted with the aid of operation elements, wherein the device (12) comprises at least one first operation element (14 to 24) at the actuation of which at least one first drive unit of the operating table (30) carries out a first action to adjust at least one first component (32 to 48) of the operating table (30),
wherein the device (12) comprises a second operation element (26) at the actuation of which at least one drive unit automatically completely reverses the first action carried out by the actuation of the first operation element (14 to 24) and wherein the first drive unit and/or the first component (32 to 46) automatically completely carries out a reversed motion sequence compared to when carrying out the first action,
wherein the device (12) comprises a third operation element (14 to 24) at the actuation of which at least a second drive unit carries out a third action to adjust the first component (32 to 46) and/or at least one second component (32 to 46), **characterised in that** the device is designed in such a way
- that the at least one first drive unit of the operating table (30) carries out the first action by actuating the first operation element (14 to 24),
- that the at least one second drive unit of the operating table (30) carries out the third action after the first action due to the subsequent actuation of the third operation element (14 to 24),
- that at the subsequent one-time actuation of the second operation element (26), the second drive unit automatically completely reverses the third action carried out by the actuation of the third operation element (14 to 24), and
- that at a subsequent further actuation of the second operation element (26), the first drive unit automatically completely reverses the first action carried out by actuating the first operation element (14 to 24).

## Revendications

1. Processus relatif à l'utilisation d'une table d'opération qui dispose d'une pluralité de composants (32 à 46) réglables à l'aide d'éléments de commande (14 à 28) ;
dans lequel le fait d'actionner au moins un premier élément de commande (14 à 24) déclenche une première action d'au moins une première unité de propulsion pour régler au moins un premier composant (32 à 46),
dans lequel du fait d'actionner un deuxième élément de commande (26), la première action effectuée en utilisant le premier élément de commande (14 à 24) est automatiquement et totalement annulée par une deuxième action au cours de laquelle la première unité de propulsion et/ou le premier composant (32 à 46) effectue automatiquement et totalement un mouvement inverse à la première action,
dans lequel du fait d'actionner une troisième commande (14 à 24), au moins une troisième action d'au moins une deuxième unité de propulsion est effectuée pour régler le premier composant (32 à 46) et /ou au moins un deuxième composant (32 à 46),
**caractérisé par le fait que**,
le premier élément de commande (14 à 24) est actionné, ce qui permet d'effectuer la première action,
le troisième élément de commande (14 à 24) est actionné après l'actionnement du premier élément de commande (14 à 24), de sorte que la troisième action est effectuée après la première,
le fait d'actionner une seule fois le deuxième élément de commande (26) annule automatiquement et totalement la troisième action, et
le fait d'actionner le deuxième élément de commande (26) une fois de plus annule automatiquement et totalement la première action.

2. Processus selon la revendication 1, **caractérisé par le fait qu'**actionner un quatrième élément de commande (28) effectue de nouveau l'action précédente qui avait été annulée automatiquement et totalement et/ou le fait d'actionner un quatrième élément de commande (28) effectue de nouveau totalement les actions qui avaient été au préalable annulées automatiquement et totalement.

3. Processus selon l'une des revendications précédentes, **caractérisé par le fait que**, pendant l'annulation d'une action, l'unité de propulsion visant à l'exécution de cette action est commandée automatiquement de telle sorte qu'un enchaînement du mouvement totalement inverse de celui des composants (32 à 48) est effectué.

4. Processus selon l'une des revendications précédentes, **caractérisé par le fait que**, pendant le déroulement de chaque action, la durée de la modification et/ou de la variabilité de la vitesse de la position angulaire d'un arbre d'entraînement de l'unité de propulsion, des arbres d'entraînement des unités de propulsion, du composant actionné et /ou des composants actionnés (32 à 48) est détectée et enregistrée comme information; l'unité de propulsion, lors de l'annulation automatique et intégrale de l'action, étant actionnée, sur la base de l'information enregistrée, de façon à effectuer automatiquement un mouvement complètement inverse par rapport à l'action devant être annulée.

5. Processus selon l'une des revendications précédentes, **caractérisé par le fait que** pendant le déroulement de chaque action la séquence d'étapes et /ou la durée d'étapes d'un moteur pas à pas servant d'unité de propulsion est détectée et enregistrée comme information; le moteur pas à pas, lors de l'annulation automatique et intégrale de l'action, étant actionné sur la base de l'information enregistrée avec une séquence d'étapes inverse dans le temps et/ou un sens de rotation contraire.

6. Processus selon l'une des revendications précédentes, **caractérisé par le fait que** pendant le déroulement de chaque action une action de réglage, la piste de réglage, le déroulement de la piste de réglage, la vitesse de réglage et /ou la durée de la vitesse de réglage d'une commande linéaire servant d'unité de commande est détectée et enregistrée comme information, la commande linéaire, lors de l'annulation de l'action étant actionnée sur la base de l'information enregistrée, de sorte que ledit au moins un composant exécute un mouvement inverse à celui effectué pendant l'action devant être annulée complètement et totalement.

7. Processus selon l'une des revendications précédentes 4 à 6, **caractérisé par le fait qu'**en plus ou en alternative la durée de l'actionnement de l'unité de commande et/ou le niveau de vitesse actionné pour cette unité de commande est détecté et enregistré comme information.

8. Processus selon l'une des revendications précédentes, **caractérisé par le fait que** l'au moins une unité de propulsion et/ou la pluralité des unités de propulsion sont actionnées par une unité de contrôle dépendante des données de commande résultant de l'utilisation des éléments de commande (14 à 24).

9. Processus selon l'une des revendications précédentes, **caractérisé par le fait que** l'unité de contrôle enregistre les paramètres de l'action ou des actions effectuée(s).

10. Processus selon l'une des revendications précédentes, **caractérisé par le fait que** plusieurs actions sont effectuées par l'actionnement du premier élément de commande (14 à 24) et qu'en cas d'actionnement du deuxième élément de commande (26), lesdites plusieurs actions sont annulées automatiquement et totalement en sens inverse.

11. Dispositif pour la commande d'une table d'opération disposant d'une pluralité de composants (32 à 46) réglables par des éléments de commandes, le dispositif (12) comprenant au moins un premier élément de commande (14 à 24), dont l'actionnement permet à une première unité de propulsion de la table d'opération (30) d'exécuter une première action pour régler au moins un premier composant (32 à 48) de la table d'opération (30),
le dispositif (12) comprenant un deuxième élément de commande (26) dont l'actionnement permet à l'au moins une unité de propulsion d'annuler automatiquement et totalement la première action effectuée en actionnant le premier élément de commande (14 à 24), et à la première unité de propulsion et/ou au premier composant (32 à 46) d'exécuter automatiquement et totalement un mouvement inverse à celui effectué lors de l'exécution de la première action,
le dispositif (12) comprenant un troisième élément de commande (14 à 24) dont l'actionnement permet à l'au moins une deuxième unité de propulsion d'exécuter une troisième action pour régler le premier composant (32 à 46) et /ou au moins d'un deuxième composant (32 à 46), **caractérisé par le fait que** le dispositif est conçu de telle façon que,
- l'au moins une première unité de propulsion de la table d'opération (30) exécute la première action en actionnant le premier élément de commande (14 à 24),
- l'au moins une deuxième unité de propulsion de la table d'opération (30) exécute la troisième action après la première en actionnant ensuite le troisième élément de commande (14 à 24),
- en actionnant ensuite une seule fois le deuxième élément de commande (26), la deuxième unité de propulsion annule automatiquement et totalement la troisième action effectuée en actionnant le troisième élément de commande (14 à 24), et
- en actionnant une fois encore le deuxième élément de commande (26), la première unité de propulsion annule automatiquement et totalement la première action effectuée en actionnant le premier élément de commande (14 à 24).
